# EUROPÄISCHE PATENTSCHRIFT

(11) **EP 0 381 917 B1**
(45) Veröffentlichungstag und Bekanntmachung des Hinweises auf die Patenterteilung: **02.03.1994**
(21) Anmeldenummer: 89890089.9
(22) Anmeldetag: 31.03.1989
(51) Int. Cl.: B62J 19/00, B60J 11/00

(54) **Zusammenlegbare Abdeckung für Kraftfahrzeuge, insbesondere für Motorräder**
Folding cover for motor vehicles, especially for motor cycles
Housse repliable pour véhicules à moteur, en particulier pour motocyclettes

(30) Priorität: 10.02.1989 AT 295/89
(43) Veröffentlichungstag der Anmeldung: 16.08.1990
(73) Patentinhaber: Reiter, Klaus, A-6071 Aldrans/Tirol (AT)
(72) Erfinder: Reiter, Klaus, A-6071 Aldrans/Tirol (AT)

(56) Entgegenhaltungen:
- DE-A- 969 979
- FR-A- 2 629 764
- GB-A- 480 382
- US-A- 4 715 646

## Beschreibung

Die Erfindung bezieht sich auf eine zusammenlegbare Abdeckung für Motorräder, die von einer im wesentlichen der Rahmenform des abzudeckenden Motorrades angepaßten bzw. auf diese zugeschnittenen Abdeckhaube, mit einem nahe dem Stand- bzw. Bodenbereich des Motorrades verlaufenden unteren Rand gebildet ist.

Aus der DE-C 969 979 ist eine Abdeckung der genannten Art für Motorroller bekannt, welche dem Kraftfahrzeug lose übergestülpt wird. Wegen fehlender Befestigungselemente bietet die Abdeckung jedoch nur unzureichend Witterungsschutz und erlaubt auch unbefugten Personen ungehinderten Zugang. Bei dieser Abdeckung ist vorgesehen, im Bereich der Scheinwerfer und des Rücklichts des Motorrollers die Abdeckung aus lichtdurchlässigem Material auszuführen, sodaß die Abdeckung während des Fahrbetriebes auch als Regenschutz für Fahrer und Beifahrer verwendet werden kann. Es sind jedoch im Bereich von Kennzeichentafeln, Prüfplaketten oder Typenschildern keine transparenten Fenster in der Abdeckung vorgesehen, sodaß beim abgestellten fahrzeug ein Aufsichts- oder Bewachungsorgan die Abdeckung entfernen müßte, um die Markierungen des Motorrollers ablesen zu können.

Eine ähnliche Abdeckung für ein abgestelltes Motorrad wird auch in der GB-A 480 382 beschrieben, wobei wegen dem gänzlichen Fehlens lichtdurchlässiger oder transparenter Bereiche die gleichen genannten Nachteile auftreten.

Es sind auch lose beutelartige Abdeckungen bekannt geworden, die zwar das abgestellte Fahrzeug besser abdecken und auch leicht aufsetzbar sind, aber der Form des Fahrzeuges nicht angepaßt sind und somit vollständigem Witterungsschutz und zufriedenstellenden Sicherheitsbedürfnissen nicht gerecht werden.

Ziel der Erfindung ist es, diese Nachteile zu vermeiden und eine Abdeckung der eingangs genannten Art zu schaffen, welche in jedem Fall einen individuellen Schutz vor mechanischen Beschädigungen und Witterungseinflüssen gewährleistet, den unerwünschten Zugang zum abgestellten Fahrzeug erschwert und trotzdem die sichere Identifizierung des Fahrzeuges ermöglicht.

Dieses Ziel wird erfindungsgemäß dadurch erreicht, daß die Abdeckhaube vor Kennzeichentafeln oder Prüfplaketten oder Typenschildern des abgedeckten Motorrades, mit transparenten Fenstern ausgebildet und der untere Rand der Abdeckhaube mit einem langgestreckten Sicherungselement für den Sitz der Abdeckhaube am Motorrad versehen ist, so daß die Markierungen des Motorrades bei auf das Motorrad aufgesetzter Haube ablesbar sind.

Aufgrund dieser Ausbildung kann die Abdeckung einerseits leicht angebracht werden und andererseits gegen unerwünschte Inbetriebnahme des Fahrzeuges einen wesentlich besseren Schutz bieten, da, z.B. die aus einer Folie bzw. einem getränkten Gewebe bestehende, Abdeckhaube sich an das abgestellte Fahrzeug anschmiegt. Vor allem können aufgrund der Anbringung von transparenten Fenstern in der an das Fahrzeug angepaßten Abdeckhaube Aufsichtspersonen oder Bewachungspersonal jederzeit die wesentlichen Merkmale des Fahrzeuges erkennen, ohne daß die Abdeckung entfernt werden muß und somit die Möglichkeit einer Reschädigung oder einer unerwünschten Inbetriebnahme des Fahrzeuges besteht. Dies ist besonders dann von Vorteil, wenn das Fahrzeug für längere Zeit geparkt werden muß und es für längere Zeit vom Benützer selbst unbeaufsichtigt bleibt.

Eine lagerichtige Fixierung und Sicherung der Abdeckhaube läßt sich vorzugsweise in einfacher Weise dadurch erreichen, daß das langgestreckte Sicherungselement aus am unteren Rand angebrachten Ösen und einer die Ösen durchlaufenden Schnur od. dgl. besteht.

Ein besonderer Schutz gegen Beschädigung des abgestellten Fahrzeuges, insbesondere gegen Auffahrunfälle, ergibt sich dadurch, daß in Weiterer Ausgestaltung der Erfindung die Abdeckhaube auch im Bereich von Leuchten, insbesondere Schlußleuchten, Parkleuchten, und/oder Reflektoren mit transparenten Fenstern versehen ist.

Eine größere Anpassungsfähigkeit der Abdeckung, insbesondere von Motorrädern und eine bessere Lagesicherung der transparenten Fenster und damit ein noch wesentlich besserer Schutz gegen Beschädigungen können dadurch erzielt werden, daß in der Abdeckhaube speziell angepaßte Ausbuchtungen für vom Fahrzeug abstehende Einrichtungen, wie Balancegriffe, Rückspiegel, Werkzeugkästen u.s.w., vorgesehen sind.

Um eine Weiterverwendung der erfindungsgemäßen Abdeckung bei Verschmutzung oder Beschädigung der transparenten Fenster zu gewährleisten, wird im Rahmen der Erfindung weiters vorgeschlagen, daß die transparenten Fenster z.B. mittels Rahmen und/oder Druckknopfverbindungen von innen lösbar am undurchsichtigen Teil der Abdeckhaube befestigt sind. Dadurch ist eine Auswechselbarkeit der Fenster gewährleistet.

Die Erfindung wird anhand der schematischen Zeichnung näher erläutert. Es zeigen in schaubildlicher Darstellung
- Fig. 1: eine Ansicht eines durch eine erfindungsgemäße Abdeckung umhüllten Motorrades,
- Fig. 2: eine Ansicht einer anderen Ausführungsform der erfindungsgemäßen Abdeckung, und
- Fig. 3: eine weitere Ausführungsform der Erfindung.

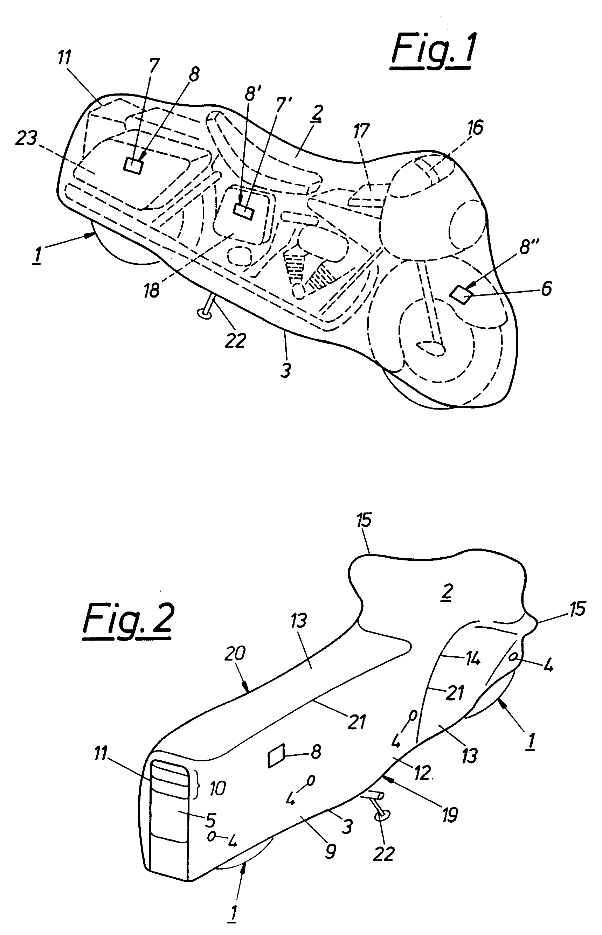

Die zusammenlegbare Abdeckung für Motorräder gemäß der Zeichnung, besteht vorzugsweise aus Folienmaterial und ist von einer im wesentlichen der Rahmenform des abzudeckenden Motorrades 1 angepaßten bzw. auf diese zugeschnittenen Haube 2 gebildet, die einen nahe dem Stand- bzw. Bodenbereich des Fahrzeuges 1 verlaufenden unteren Rand 3 aufweist. Über den Umfang der an das Motorrad 1 angepaßten Abdeckung 2 sind Ösen 4 zum Anbringen eines langgestreckten Sicherungselementes, z.B. eines Sicherungsbandes oder einer Sicherungsschnur (nicht dargestellt) verteilt. Die der Form des Fahrzeuges 1 angepaßte Abdeckhaube 2 ist zum größten Teil undurchsichtig ausgebildet und im Bereich von Markierungen des abgedeckten Fahrzeuges, z.B. Kennzeichentafeln 5, Prüfplaketten 6 und ggf. Typenschildern 7,7′ mit transparenten Fenstern 8,8′ ,8˝ versehen, so daß die entsprechenden Markierungen, Daten oder Informationen bei auf das Motorrad 1 aufgesetzter Haube 2 ablesbar sind. In Fig. 1 ist die Abdeckung in vollen Linien und der abgedeckte Teil des Motorrades strichliert ausgeführt, um die Funktion der Abdeckung zu veranschaulichen.

Dabei kann zumindest ein Teil des undurchsichtigen Bereiches 9 der Abdeckhaube 2 aus lichtreflektierendem Material bestehen. Die Abdeckhaube 2 kann auch im Bereich von Leuchten 10, insbesondere Schlußleuchten, Parkleuchten oder Reflektoren mit transparenten Fenstern 11 versehen sein. Schlußleuchten, Parkleuchten und Reflektoren sind am Motorrad 1 so angebracht, daß sie den gesetzlichen Bestimmungen entsprechen. Günstig ist es, wenn der undurchsichtige Bereich 9 der Abdeckhaube 2 mindestens zwei Großflächen 12, 13 mit verschiedenen Farbtönen zur Grobmarkierung des Motorrades 1 umfaßt. Dabei bilden Grenzlinien 14 zwischen den verschiedene Farbtöne aufweisenden Großflächen 12, 13 Muster zur Markierung des Motorrades, wobei die Grenzlinien 14 vorzugsweise entlang von Konturen des abgedeckten Motorrades 1 verlaufen. Zur Abdeckung von Motorrädern sind in der Abdeckhaube 2 speziell angepaßte Ausbuchtungen 15 für vom Motorrad 1 abstehende Einrichtungen, wie Balancegriffe, Rückspiegel, Werkzeugkästen u.s.w. vorgesehen.

Bei der erfindungsgemäßen Abdeckung kann der undurchsichtige Bereich 9 der Abdeckhaube 2 zumindest teilweise von lichtabsorbierendem Material gebildet sein. Weiters ist es wünschenswert, wenn die Abdeckhaube 2 so gestaltet ist, daß sie umstülpbar und somit beidseitig verwendbar ist.

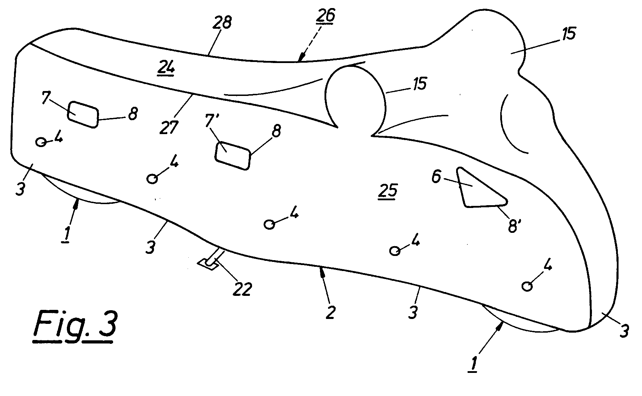

Wie aus den Fig. 2 und 3 ersichtlich, kann die Abdeckhaube aus mindestens zwei verschiedenfarbigen Folienteilen 19, 20 bestehen, die aneinander, z.B. durch Nähte 21, insbesondere Schweißnähte, befestigt sind. Die transparenten Fenster 8, 11 können z.B. mittels, im Detail nicht dargestellter, Rahmen und/oder Druckknopfhalterungen, am übrigen Teil 9 der Abdeckhaube 2 von innen lösbar befestigt sein, so daß sie bei Bedarf ausgetauscht werden können. Die Abdeckhaube 2 kann von einer transparenten Folie gebildet sein, die an undurchsichtig zu gestaltenden Bereichen 9 z.B. mit lichtreflektierenden, lichtabsorbierenden oder verschiedenfärbigen Folienteilen unterlegt ist. Dabei müssen die einzelnen Folienteile fest miteinander verbunden sein. In der Abdeckung können gemäß einer speziellen Ausführungsform der Erfindung, insbesondere am unteren Rand 3 der Abdeckung (nicht dargestellte) Ausnehmungen vorgesehen sein, über die für die Wartung wesentliche Teile des Fahrzeuges, wie Ständer 22, Türen von Werkzeugkästen 18 oder Transportbehältern 23 u.s.w. zugänglich sind. Der Zugang kann dabei zum Teil über mit Reißverschlüssen oder Druckknopfanordnungen fixierte Folienteile erfolgen.

Wenn ein langgestrecktes Sicherungselement durch die Ösen 4 der Haube 2 gefädelt ist, können die Enden des Sicherungselementes über spezielle Verbindungsglieder wie Nummernschlösser od. dgl. miteinander verbunden bzw. gesichert sein. Um ein unerwünschtes Abnehmen der Haube 2 vom Motorrad 1 zu verhindern, kann das Sicherungselement durch am Motorrad 1 fest verankerte Bügel oder Halteringe hindurchgeführt sein. Eine besonders einfache Ausführungsform der erfindungsgemäßen Abdeckhaube besteht (wie insbesondere aus Fig. 3 ersichtlich) aus einem sich über die Längsausdehnung des abzudeckenden Fahrzeuges 1 erstreckenden Mittelteil 24 und aus zwei mit diesem verbundenen Seitenteilen 25 und 26, wobei diese Teile 24, 25, 26 miteinander durch Nähte 27 und 28, insbesondere Schweißnähte verbunden sind, so daß sich die Haube 2 zwecks Anpassung an die Form des Fahrzeuges 1 leicht herstellen und bei Verwendung von verschiedenfarbigen Einzelteilen der Abdeckung eine spezielle Grobmarkierung des Fahrzeuges erzielen läßt.

Besonders wichtig ist es für die erfindungsgemäße Abdeckung, daß das Folienmaterial, das aus beliebigem geeigneten Kunststoff, aber auch aus anderem Material bestehen kann, besonders schmiegsam ist, so daß die Fenster 8, 11, durch welche die Daten des Fahrzeuges 1 bei aufgesetzter Haube 2 ersichtlich sein sollen, richtig zu liegen kommen. Die Anpassung der Hauben 2 an die Fahrzeuge erfolgt in der Weise, daß etwa annähernd für eine Typenreihe eine angepaßte Folienserie hergestellt wird. Natürlich kann, wenn dies gewünscht wird, für jede spezielle Art von Fahrzeug eine für dieses Fahrzeug charakteristische Abdeckung erzeugt werden, die exakt den Bedürfnissen dieses Fahrzeuges entspricht. Das Folienmaterial kann eine Kunststoff-Folie sein, kann aber auch aus getränktem Gewebe od. dgl. bestehen, so daß der entsprechende Schutz des Fahrzeuges vor Witterungseinflüssen und sonstigen Einflüssen gegeben ist.

## Patentansprüche

1. Zusammenlegbare Abdeckung für Motorräder, die von einer im, wesentlichen der Rahmenform des abzudeckenden Motorrades (1) angepaßten bzw. auf diese zugeschnittenen Abdeckhaube (2), mit einem nahe dem Stand- bzw. Bodenbereich des Motorrades (1) verlaufenden unteren Rand (3) gebildet ist, **dadurch gekennzeichnet**, daß die Abdeckhaube (2) vor Kennzeichentafeln (5) oder Prüfplaketten (6) oder Typenschildern (7, 7') des abgedeckten Motorrades (1) mit transparenten Fenstern (8,8',8'',11) ausgebildet und der untere Rand (3) der Abdeckhaube (2) mit einem langgestreckten Sicherungselement für den Sitz der Abdeckhaube (2) am Motorrad (1) versehen ist, so daß die Markierungen des Motorrades (1) bei auf das Motorrad (1) aufgesetzter Haube (2) ablesbar sind.

2. Abdeckung nach Anspruch 1, **dadurch gekennzeichnet**, daß das langgestreckte Sicherungselement aus am unteren Rand (3) angebrachten Ösen (4) und einer die Ösen (4) durchlaufenden Schnur od. dgl. besteht.

3. Abdeckung nach Anspruch 1 oder 2, **dadurch gekennzeichnet**, daß die Abdeckhaube (2) auch im Bereich von Leuchten (10), insbesondere Schlußleuchten, Parkleuchten, und/oder Reflektoren mit transparenten Fenstern (11) versehen ist.

4. Abdeckung nach einem der Ansprüche 1 bis 3, **dadurch gekennzeichnet**, daß in der Abdeckhaube (2) speziell angepaßte Ausbuchtungen (15) für vom Motorrad (1) abstehende Einrichtungen, wie Balancegriffe (16), Rückspiegel (17), Werkzeugkästen (18) u.s.w., vorgesehen sind.

5. Abdeckung nach einem der Ansprüche 1 bis 4, **dadurch gekennzeichnet**, daß die transparenten Fenster (8, 11) z.B. mittels Rahmen und/oder Druckknopfhalterungen von innen lösbar am undurchsichtigen Teil (9) der Abdeckhaube (2) befestigt sind.

## Claims

1. A collapsible cover for motorcycles which is formed by a guard cover (2) substantially adapted to the form of the frame of the motorcycle (1) to be covered or cut to fit well thereto, having a lower edge (3) extending near the stand or floor area of the motorcycle (1), characterized in that the guard cover (2) is provided with transparent windows (8, 8', 8'', 11) over number plates (5) or examination stickers (6) or serial number plates (7, 7') of the covered motorcycle and that the lower edge (3) of the guard cover (2) is provided with a securing element extending longitudinally so as to provide the seat of the guard cover (2) on the motorcycle (1), so that the markings of the motorcycle (1) are readable when the cover (2) is placed on to the motorcycle (1).

2. A cover as claimed in claim 1, characterized in that the securing element extending longitudinally consists of eyes (4) provided on the lower edge (3) and a rope or the like passing through said eyes (4).

3. A cover as claimed in claim 1 or 2, characterized in that the guard cover (2) is provided with transparent windows (11) also in the zone of the lamps (10), in particular the rear lamps, parking lamps, and/or reflectors. (Fig. 2)

4. A cover as claimed in one of the claims 1 to 3, characterized in that specially adapted bulges (15) are provided in the guard cover (2) for elements projecting from the motorcycle such as balance handles (16), rear-view mirrors (17), toolboxes (18), etc.

5. A cover as claimed in one of the claims 1 to 4, characterized in that the transparent windows (8, 11) are attached detachably from the inside to the opaque part (9) of the guard cover (2) by means of a frame and/or press button fixing devices, for example.

## Revendications

1. Housse repliable pour motocyclette, qui est formée d'une coiffe de recouvrement (2) sensiblement adaptée à la forme du cadre de la motocyclette (1) à recouvrir, ou taillée aux mesures de ce cadre, et présente un bord inférieur (3) qui s'étend à proximité de la région de support ou de sol de la motocyclette (1), caractérisée en ce qui la coiffe de recouvrement (2) est munie de fenêtres transparentes (8, 8', 8'', 11), devant les plaques d'immatriculation (5), vignettes de contrôle (6) ou plaques signalétiques (7, 7') de la motocyclette (1) recouverte, et le bord inférieur (3) de la coiffe de recouvrement (2) est muni d'un élément de fixation de forme allongée pour fixer la coiffe de recouvrement (2) sur la motocyclette (1), de manière que les marquages de la motocyclette puissent être lues lorsque la coiffe (2) est mise en place sur la motocyclette (1).

2. Housse selon la revendication 1, caractérisée en ce que l'élement de fixation de forme allongée est composé d'oeillets (4) disposés le long du bord inférieur (3) et d'un cordon ou équivalent oui est passé dans les oeillets (4).

3. Housse selon la revendication 1 ou 2, caractérisée en ce que la coiffe de recouvrement (2) est aussi munie de fenêtres transparentes (11) dans la région des feux (10), notamment des feux de position, des feux de stationnement et/ou des réflecteurs (figure 2).

4. Housse selon une des revendications 1 à 3, caractérisée en ce qu'il est prévu dans la coiffe de recouvrement (2) des poches (15) spécialemant adaptées aux dispositifs qui font saillie sur la motocyclette (1), tels que las poignées de maintien (16), les rétroviseurs (17), les coffres à outils (18), etc.

5. Housse selon une des revendications 1 à 4, caractérisée en ce que les fenêtres transparentes (8, 11) sont fixées à la partie opaque (9) de la pousse (2) d'une façon démontable de l'intérieur, par exemple au moyen d'encadrements et/ou de fixations à boutons-pression.
